# EUROPÄISCHE PATENTSCHRIFT

(11) **EP 3 992 687 B1**
(45) Veröffentlichungstag und Bekanntmachung des Hinweises auf die Patenterteilung: **23.08.2023**
(21) Anmeldenummer: 21204992.8
(22) Anmeldetag: 27.10.2021
(51) Int. Cl.: G02B 21/00, G02B 21/36

(54) **MIKROSKOP UND VERFAHREN ZUR LICHTFELDMIKROSKOPIE MIT LICHTBLATTANREGUNG SOWIE ZUR KONFOKALEN MIKROSKOPIE**
MICROSCOPE AND METHOD FOR LIGHT FIELD MICROSCOPY WITH LIGHT SHEET EXCITATION AND CONFOCAL MICROSCOPY
MICROSCOPE ET PROCÉDÉ DE MICROSCOPIE À CHAMP LUMINEUX À EXCITATION DE FEUILLET LUMINEUX, AINSI QUE MICROSCOPIE CONFOCALE

(30) Priorität: 01.11.2020 DE 102020213714
(43) Veröffentlichungstag der Anmeldung: 04.05.2022
(73) Patentinhaber: Carl Zeiss Microscopy GmbH, 07745 Jena (DE)
(72) Erfinder: ANHUT, Tiemo, 07745 Jena (DE); SCHWEDT, Daniel, 07745 Jena (DE); WALD, Matthias, 07751 Jena (DE); MEHNER, Thomas, 07745 Jena (DE)
(74) Vertreter: Meyer, Jork

(56) Entgegenhaltungen:
- WO-A1-2017/147528
- US-A1- 2019 196 172
- US-A1- 2019 250 387
- NGUYEN TRUNG D ET AL: "Single-objective multiphoton light-sheet microscopy for tumor organoid screening", PROGRESS IN BIOMEDICAL OPTICS AND IMAGING, SPIE - INTERNATIONAL SOCIETY FOR OPTICAL ENGINEERING, BELLINGHAM, WA, US, Bd. 10882, 22. Februar 2019 (2019-02-22), Seiten 108822P-108822P, XP060119008, ISSN: 1605-7422, DOI: 10.1117/12.2510186 ISBN: 978-1-5106-0027-0

## Beschreibung

Die Erfindung betrifft ein Mikroskop gemäß dem Oberbegriff des Anspruchs 1 und ein Verfahren zum Betrieb eines Mikroskops zur Lichtfeldmikroskopie mit Lichtblattanregung sowie zur konfokalen Mikroskopie.

Die schnelle Erfassung dreidimensionaler Probenvolumina rückt mehr und mehr in den Fokus der modernen Mikroskopie. Eine wesentliche Anwendung stellt hierbei die Messung neuronaler Signale in Netzwerken von Nervenzellen dar. Diese Netzwerke breiten sich im Hirn über mehrere hundert oder tausend Mikrometer aus. Um nun wesentliche Leistungen des Hirns verstehen zu können, sollen Reaktionen dieser Netzwerke oder großer Teile derselben mit hoher zeitlicher Auflösung möglichst vollständig erfasst werden. Da es hierbei nicht nur um das Verständnis der morphologischen Struktur, sondern um funktionale Prozesse geht, werden diese Verfahren auch unter dem Stichwort der funktionalen Bildgebung zusammengefasst.

Auf dem Gebiet der Mikroskopie sind eine Reihe unterschiedlicher Methoden bekannt, mit denen sich der funktionalen Bildgebung genähert werden kann. Methodische Ansätze, zum Beispiel eine schnelle, axial gerastert 2D-Aufnahme, sind in der Regel für das oben umrissene Anwendungsgebiet zu langsam. Rein auf eine algorithmische Auswertung orientierte Methoden (computational imaging) sind in der Regel anfällig für Artefakte.

Konfokale, scannende Verfahren mit einem geringen Grad an Parallelisierung haben den Nachteil, dass sie relativ langsam und zeitsequenziell arbeiten. Eine Erhöhung der Geschwindigkeit geht oft einher mit einer Erhöhung der Lichtleistung in der Probe, wobei eine höhere Lichtleistung verwendete fluoreszente Marker sättigen und die Probe schädigen kann. Eine weitere punktscannende Methode stellt die Mehrphotonenmikroskopie dar. Auch hierbei ist der Grad der Parallelisierung gering.

Eine höhere Parallelisierung ist beispielsweise mittels der Spinning-Disk-Mikroskopie möglich. Dabei wird eine größere Anzahl von Abtaststrahlen gleichzeitig über eine Probe geführt und die jeweils bewirkten Detektionsstrahlungen durch sogenannte Pinholes erfasst, die in einer sich drehenden Scheibe (Disk) vorhanden sind. Diese konfokale Methode erlaubt beispielsweise, einige hundert Fokalvolumina parallel zu scannen.

Ebenfalls einen höheren Grad an Parallelisierung weisen Verfahren und Anordnungen auf, welche von einer sogenannten Lichtblattbeleuchtung Gebrauch machen. Dazu wird ein statisches oder dynamisches Lichtblatt erzeugt und in die Probe gerichtet. Aufgrund der sehr geringen Dicke (Lichtblattdicke) des Lichtblatts quer zu dessen flächiger Ausdehnung wird nur in einer aktuell beleuchteten Ebene Detektionsstrahlung, insbesondere Fluoreszenzstrahlung, bewirkt.

Alternativ zu einer selektiven Beleuchtung von Bereichen der Probe wird bei Anwendung der Lichtfeldmikroskopie eine Weitfeldbeleuchtung verwendet. Eine Detektion nach der Lichtfeldtechnologie erlaubt eine schnelle Datenerfassung innerhalb, aus Sicht der Mikroskopie, größerer Volumina, sowie eine gute Tiefenauflösung. Die Nachteile sind in der fehlenden Möglichkeit des optischen Schneidens und einer starken Hintergrundstrahlung zu sehen.

Die Erfassung eines größeren Volumens bei gleichzeitig verbesserter Auflösung kann durch die Verwendung eines Mikrolinsenarrays vor dem Detektor erzielt werden. In der Publikation Cong et al. (Cong, L. et al. 2017; eLife, 6:e28158) ist dazu ein Mikrolinsenarray vorgeschlagen, in dem Mikrolinsen unterschiedlicher Fokallänge angeordnet sind. Nachteilig ist allerdings, dass von jeder der Mikrolinsengruppen nur ein Teil der Apertur genutzt wird.

Die Methode der Lichtfeld-Bildgebung in Form der Fourier-Integral-Mikroskopie nutzt ein Mikrolinsenarray, das in einer Pupillenebene des Mikroskops angeordnet ist. In der Brennebene des Mikrolinsen Arrays erscheint eine Vielzahl von Abbildungen des Probenraumes. Die Brennebene jeder einzelnen Mikrolinse ist dabei konjugiert zur gleichen Objektebene. Im einfachsten Fall steht in dieser Zwischenbildebene der zur Bildaufnahme verwendete Detektor. Diese Ausgestaltung der Lichtfeldmikroskopie wird nachfolgend auch als Lichtfeldabbildung im Fourierraum bezeichnet.

Die Bildgebung mittels der Lichtfeldmikroskopie hat die Erfassung einer räumlichen Struktur (3D-Struktur) der Probe mit nur einer Aufnahme zum Ziel. Dazu werden die durch das Mikrolinsenarray bewirkten Abbildungen miteinander verrechnet. Jede dieser Abbildungen zeigt dieselbe Probe, aber unter verschiedenen Winkeln, so dass beispielsweise durch einen einfachen "shift-and-add"-Algorithmus verschiedene Ebenen innerhalb der Schärfentiefe dieser Abbildungen scharf dargestellt werden können. Aufgrund der reduzierten numerischen Apertur (NA) pro Abbildungskanal ist das laterale Auflösungsvermögen zwar deutlich eingeschränkt, aber man gewinnt im Gegenzug die Auflösung der axialen Struktur des Probenvolumens.

Wird die Technologie der Lichtfeldmikroskopie zusammen mit einer Weitfeldbeleuchtung ausgeführt, ist der Kontrast aufgrund außerfokaler Objektstrukturen stark gemindert. Um nun einerseits ein großes Volumen auszuleuchten und andererseits eine Abbildung auch mit einem hohen Kontrast zu erreichen, kann die Probe mit einem Lichtblatt beleuchtet werden, welches dicker als ein üblicherweise bei der Lichtblattmikroskopie (Selective Plane Illumination Microscopy; SPIM) verwendetes Lichtblatt ist. Der Vorteil eines dicken Lichtblattes ist, dass nur das abzubildende Probenvolumen ausgeleuchtet wird. Nicht durch das dicke Lichtblatt beleuchtete Bereiche wirken sich nicht kontrastmindernd aus (Truong, T.V. et al., (2020), Commun Biol 3: 74).

Aus dem Stand der Technik ist bekannt, dass für eine inklinierte Einstrahlung des dicken Lichtblattes ein gemeinsam für die Beleuchtung und die Detektion verwendetes Objektiv verwendet werden kann. Das gemeinsame Objektiv ermöglicht neben der Beleuchtung auch das Kollimieren einer zu detektierenden Strahlung aus der Probe. Mit einer solchen technischen Lösung wird der gerätetechnische Aufwand in Grenzen gehalten und die Herstellungskosten des Gerätes werden begrenzt (z. B. DE 10 2014 102 215 A1, DE 10 2011 000 835 B4).

Eine weitere Ausführung eines Mikroskops ist aus der DE 10 2016 011 227 B3 bekannt. Darin wird ein Mikroskopsystem beschrieben, dass zwischen zwei Betriebsarten geschaltet werden kann. Das Mikroskopsystem umfasst eine lichtblattmikroskopische Funktionseinheit, die eine Probe in einem ersten Betriebszustand des Mikroskopsystems mittels einer lichtblattartigen Beleuchtungslichtverteilung beleuchtet und abbildet. Weiterhin ist eine rastermikroskopische Funktionseinheit vorhanden, welche die Probe in einem zweiten Betriebszustand des Mikroskopsystems mittels einer punktartigen Beleuchtungslichtverteilung beleuchtet und abbildet. Eine Steuereinheit dient dem Umschalten zwischen dem ersten Betriebszustand und dem zweiten Betriebszustand.

Aufgabe der Erfindung ist es, eine flexible Möglichkeit zur Abbildung einer Probe mittels der Lichtfeldtechnologie vorzuschlagen, die insbesondere die Nutzung eines weiteren Mikroskopieverfahrens erlaubt. Es ist weiterhin Aufgabe der Erfindung, ein Verfahren zum Betrieb eines verschiedenartig einsetzbaren Mikroskops vorzuschlagen.

Die Aufgabe wird durch die Gegenstände der unabhängigen Ansprüche gelöst. Vorteilhafte Weiterbildungen sind in den abhängigen Ansprüchen genannt.

Das Mikroskop weist einen Anregungsstrahlengang auf, in dem eine Lichtquelle, insbesondere eine Laserlichtquelle zur Bereitstellung einer Anregungsstrahlung vorhanden ist. Weiterhin umfasst der Anregungsstrahlengang eine Scanvorrichtung, mittels der die reflektierte Anregungsstrahlung gesteuert ausgelenkt werden kann, und ein Objektiv zum Beleuchten einer Probe mit der Anregungsstrahlung und zum Erfassen einer mittels der Anregungsstrahlung bewirkten Detektionsstrahlung sowie Mittel zum Umschalten zwischen einer ersten Betriebsart des Mikroskops und einer zweiten Betriebsart des Mikroskops.

Erfindungsgemäß ist das Mikroskop dadurch gekennzeichnet, dass ein Farbteiler im Anregungsstrahlengang angeordnet ist, der für die Anregungsstrahlung reflektierend ist und durch dessen Wirkung ein Strahlenbündel der Anregungsstrahlung entlang des weiteren Anregungsstrahlengangs reflektiert wird. Weiterhin befindet sich in dem Anregungsstrahlengang zwischen Lichtquelle und Farbteiler eine erste Vorrichtung zum Einbringen optischer Elemente in den Anregungsstrahlengang, wobei mittels der ersten Vorrichtung in einem ersten Betriebszustand des Mikroskops ein erstes zylinderoptisches Element in den Anregungsstrahlengang eingebracht werden kann. Außerdem ist in dem Anregungsstrahlengang zwischen Farbteiler und Scanvorrichtung eine zweite Vorrichtung zum Einbringen optischer Elemente in den Anregungsstrahlengang vorhanden, wobei mittels der zweiten Vorrichtung in dem ersten Betriebszustand des Mikroskops ein zweites zylinderoptisches Element in den Anregungsstrahlengang eingebracht werden kann.

Das Einbringen des ersten beziehungsweise des zweiten zylinderoptischen Elements kann erfolgen, indem dieses in der Anregungsstrahlengang beispielsweise eingeschwenkt oder eingeschoben wird. In der zweiten Betriebsart sind das erste und das zweite zylinderoptische Element aus dem Anregungsstrahlengang entfernt. Um ein Ein- bzw. Ausschwenken beziehungsweise ein Einschieben beziehungsweise Herausziehen der betreffenden zylinderoptischen Elemente zu ermöglichen, sind die erste Vorrichtung und die zweite Vorrichtung beispielsweise als ein Rad oder Revolver mit verschiedenen Positionen zur Aufnahme von optischen Elemente wie Filtern, dem zylinderoptischen Element oder auch der Möglichkeit eines freien Durchgangs der Anregungsstrahlung ausgebildet. Die erste und/oder die zweite Vorrichtung können in weiteren Ausführungen auch in Form eines Schiebers oder eines Magazins realisiert sein.

Durch Wirkung des ersten zylinderoptischen Elements wird ein Strahlenbündel der Anregungsstrahlung in seinem Querschnitt quer zur Ausbreitungsrichtung der Anregungsstrahlung, also quer zur optischen Achse des Mikroskops, in einer ersten Richtung beschränkt. Auf diese Weise wird grob eine Dicke eines zu erzeugenden Lichtblatts eingestellt.

In dem Anregungsstrahlengang kann weiterhin zwischen der ersten Vorrichtung zum Einbringen optischer Elemente in den Anregungsstrahlengang (nachfolgend auch kurz: erste Vorrichtung) und dem Farbteiler eine einstellbare Blende vorhanden sein. Eine solche einstellbare Blende dient der Feineinstellung der Dicke eines zu erzeugenden Lichtblatts. Die einstellbare Blende kann beispielsweise als ein Revolverrad mit einer Vielzahl von Positionen zur Aufnahme von Blenden mit unterschiedlichen Blendenaperturen ausgebildet sein. In einer weiteren Ausführung ist die einstellbare Blende eine größenveränderliche Spaltblende. Die Blende kann auch ein verschiebbares Magazin oder ein Materialstreifen mit unterschiedlich großen Blendenöffnungen sein. Der Streifen mit den Blendenöffnungen kann beispielsweise quer zum Anregungsstrahlengang verschoben werden.

Zur Veranschaulichung der Einstellungen von Dicke und Breite eines Lichtblatts seien beispielhaft folgende Werte angegeben: Bei geöffneter Blende beträgt die Lichtblattbreite etwa 3 mm, was knapp einem Fünftel eines mit einem Laserscanningmikroskop (LSM) abtastbaren Sehfeldes entspricht. Die Lichtblattdicke liegt bei etwa 0,7 mm im Zwischenbild (ZB) des Mikroskops. Mit der Blende kann die Lichtblattdicke reduziert werden. Beispielsweise entsteht mit einer Schlitzbreite von 1 mm eine Lichtblattdicke im Zwischenbild von etwa 0,32 mm mit einer Effizienz von etwa 40%. Die Begrenzung hinsichtlich der Feldabtastung mit der erreichten Lichtblattbreite wird durch die im Design des LSM festgelegten Abstände zwischen der Position des zweiten zylinderoptischen Elements und einer zur Objektivpupille (Eintrittspupille) konjugierten Ebene im Scannerraum festgelegt. In alternativen Gestaltungen des Gerätedesigns kann eine solche Begrenzung aufgehoben sein. Beispielsweise kann das zweite zylinderoptische Element, insbesondere eine Zylinderlinse, in ihrer Brennweite verkürzt sein, sodass damit mit größerer NA in die Scannerebene fokussiert wird. Dabei kann die Fokussierung so erfolgen, dass mit der erreichten Lichtblattdicke beispielsweise ein Fünftel, ein Viertel, ein Drittel, ein Halb oder das ganze Feld abgetastet wird.

Die vom Farbteiler reflektierte Anregungsstrahlung wird in der ersten Betriebsart mittels des zweiten zylinderoptischen Elements geformt, indem diese in ihrem Querschnitt quer zur Ausbreitungsrichtung der Anregungsstrahlung in einer zur ersten Richtung orthogonalen zweiten Richtung aufgezogen, d.h. verbreitert, wird. Mittels des zweiten zylinderoptischen Elements wird also eine Breite des zu erzeugenden Lichtblatts eingestellt. Die derart in zwei Richtungen geformte Anregungsstrahlung wird abseits der optischen Achse in eine bildseitige Eintrittspupille eines Objektivs eingestrahlt und in dessen Folge wird ein schräggestelltes Lichtblatt in einem objektseitigen Probenraum erzeugt. Durch die Anregungsstrahlung wird in einer in dem Probenraum befindlichen Probe eine Detektionsstrahlung bewirkt, die mittels des Objektivs gesammelt wird.

In einer möglichen Ausführung der Erfindung können der Farbteiler und die zweite Vorrichtung zum Einbringen von Elementen in den Anregungsstrahlengang (nachfolgend auch kurz: zweite Vorrichtung) jeweils Hauptfarbteiler sein. Beispielsweise kann der Farbteiler ein RGB-Hauptfarbteiler (RGB = Rot, Grün, Blau) und die zweite Vorrichtung ein sogenannter Invis-Hauptfarbteiler sein (Invis = invisible; Wellenlängen nicht sichtbaren Lichts).

Unter einer Detektionsstrahlung wird eine Strahlung verstanden, die durch Wirkung der Anregungsstrahlung in der Probe verursacht ist. Insbesondere kann durch Wirkung der Anregungsstrahlung eine Fluoreszenzstrahlung verursacht werden, die als Detektionsstrahlung erfasst wird. Die Probe beziehungsweise Bereiche oder Strukturen dieser können dazu mit anregbaren Fluoreszenzmarkern versehen sein.

In einer vorteilhaften Ausführung der Erfindung ist in dem Anregungsstrahlengang dem Farbteiler vorgeordnet ein, vorteilhafterweise einstellbares, reflektierendes Element, zum Beispiel ein manuell oder automatisiert justierbarer Spiegel, angeordnet. Durch dessen Wirkung wird die Anregungsstrahlung auf den Farbteiler gelenkt. Das einstellbare reflektierende Element erlaubt eine Korrektur einer Fokuslage der Anregungsstrahlung in einer Pupillenebene, insbesondere in einer Eintrittspupille des Objektivs. Mittels des justierbaren Spiegels kann also eine Feineinstellung eines Inklinationswinkels des Lichtblatts zur optischen Achse des Objektivs vorgenommen werden. Eine solche Korrektur kann erforderlich sein, wenn zum Beispiel ein Objektivwechsel vorgenommen wurde und eine dadurch bedingt veränderte Berandung der Pupillenapertur ausgeglichen werden soll. Die Möglichkeit zum Wechsel des Objektivs ist einer der Vorteile der Lichtfeldmikroskopie, die sich unter anderem dadurch von Methoden wie SCAPE (Swept concocally-aligned planar excitation) oder OPM (Oblique Plane Microscopy) unterscheidet. Eine Verwendung unterschiedlicher Mikroskopobjektive gelingt insbesondere dann ohne die Anordnung der Vorrichtung zu verändern, wenn die Pupillengröße ungefähr gleich groß ist. Es können vorteilhaft solche Objektive verwendet sein, deren M/NA-Verhältnis gleich ist (z. B. 40x/1,2 NA; 20x/0,6 NA, 10x/0,3 NA). Damit ist eine Beobachtung verschieden großer Volumina bei jeweils etwas verschiedener Auflösung möglich.

Da der Farbteiler in Reflektion genutzt wird, eignet sich dieser gut, um eine gewünschte Neigung des zu erzeugenden Lichtblatts einzustellen. Die Erfindung kann dazu in weiteren Ausführungen dadurch weitergebildet sein, dass der Farbteiler einen um einen Kippwinkel geneigten Spiegel aufweist. Der Kippwinkel des Spiegels führt zu einer Abweichung des Strahlenbündels der reflektierten Anregungsstrahlung von der optischen Achse. Ein durch Wirkung des ersten und zweiten zylinderoptischen Elements bedingter Fokus der reflektierten Anregungsstrahlung in der (Eintritts-)Pupille verschiebt sich infolge der Abweichung von der optischen Achse zum Rand der Eintrittspupille hin. Als Folge dieser Verschiebung wird die geformte Anregungsstrahlung abseits der optischen Achse in die Eintrittspupille eingestrahlt, was zu einem gegenüber der optischen Achse geneigten (inklinierten) Lichtblatt in einem objektseitigen Probenraum führt. Der Kippwinkel beträgt beispielsweise ±0,5°.

In einer vorteilhaften weiteren Ausführung können zwei oder mehrere Positionen der ersten Vorrichtung durch in verschiedene Richtungen um beispielsweise 0,5° verkippte Spiegel besetzt sein. Dies ermöglicht eine Änderung der Orientierung des zu erzeugenden Lichtblattes im Probenraum, so dass ein gesamtes Probenvolumen mittels der unterschiedlich orientierten Lichtblätter abgetastet werden kann. Die mit verschiedenen Beleuchtungsrichtungen erzeugten Daten werden vorteilhaft zusammengefasst. Das ist besonders deshalb von Bedeutung, da Teilbilder, deren Blickrichtung entlang des Lichtblattes orientiert ist, nur einen sehr geringen Informationsgehalt in eine nachfolgende Verrechnung der Bilddaten einbringen, aber unerwünschtes Hintergrundsignal erzeugen. Auf diese Weise kann der Beitrag der Linsen immer dann ausgeschlossen werden, wenn die Differenz zwischen dem Inklinationswinkel des Lichtblattes und dem Blickwinkel der Mikrolinse klein, beispielsweise kleiner als 10° ist.

Um die in der ersten Betriebsart des Mikroskops erfasste Detektionsstrahlung zu erfassen, ist ein erster Detektionspfad in einem Detektionsstrahlengang des Mikroskops vorhanden. In dem ersten Detektionspfad ist ein erster Detektor mit einem vorgeordneten Mikrolinsenarray mit einer Anzahl von Mikrolinsen vorhanden, wobei jeder Mikrolinse eine Anzahl von Detektorelementen des ersten Detektors optisch zugeordnet sind, so dass neben einer Ortsinformation des Ursprungs der Detektionsstrahlung auch mehrere Winkelinformationen der Detektionsstrahlung erfasst werden können.

Das Mikrolinsenarray befindet sich vorzugsweise in einer Pupille vor dem Detektor. Der Detektor selbst, insbesondere dessen Detektorfläche mit einer Anzahl von Detektorelementen, ist in einer Bildebene des Mikrolinsenarrays angeordnet.

In einer weiteren möglichen Ausführung des erfindungsgemäßen Mikroskops ist das Mikrolinsenarray in einer nominalen Bildebene angeordnet und bildet die Detektionsstrahlung auf die Detektorelemente des ersten Detektors ab. Das erfindungsgemäße Mikroskop ist daher in der ersten Betriebsart wahlweise für eine Lichtfelddetektion im Ortsraum als auch im Fourierraum verwendbar.

Die Detektionsstrahlung kann in einer vorteilhaften Ausführung nach dem Objektiv aus dem Anregungsstrahlengang gelenkt werden, wobei die Detektionsstrahlung nicht die zweite Vorrichtung, den Farbteiler und eine gegebenenfalls vorhandene Scanvorrichtung durchläuft. Die Auslenkung kann mittels eines dichroitischen Spiegels oder Strahlteilers erfolgen, der zudem ansteuerbar sein kann und je nach Betriebsart in beziehungsweise aus dem (Anregungs-)strahlengang bewegt werden kann. Diese Ausführung erlaubt eine Nachrüstung beispielsweise eines bestehenden Mikroskops, ohne dass die optischen Elemente des Anregungsstrahlengangs aufwendig angepasst werden müssen.

Ein erfindungsgemäßes Mikroskop weist im Anregungsstrahlengang eine Scanvorrichtung auf. Mittels der Scanvorrichtung kann die reflektierte Anregungsstrahlung gesteuert ausgelenkt werden. In der ersten Betriebsart kann das erzeugte Lichtblatt durch den Probenraum und entsprechend durch eine dort befindliche Probe geschoben werden. Im Ergebnis kann eine Probe mittels des Lichtblatts ganz oder teilweise abgetastet werden. In der zweiten Betriebsart wird die Scanvorrichtung verwendet, um die reflektierte Anregungsstrahlung in die Eintrittspupille des als Beleuchtungsobjektiv und Detektionsobjektiv dienenden Objektivs zu lenken und in der weiteren Folge eine im Probenraum befindliche Probe insbesondere mit einem Lichtpunkt (Spot, Fokus) abzutasten.

Zwischen dem Farbteiler und der Scanvorrichtung kann in einer weiteren Ausführung der Erfindung ein optischer Zoom vorhanden sein.

Um das erfindungsgemäße Mikroskop alternativ in der ersten Betriebsart oder in der zweiten Betriebsart zu betreiben, sind Mittel zum Umschalten zwischen den beiden Betriebsarten vorhanden. Dazu gehören die erste und die zweite Vorrichtung zum Einbringen zylinderoptischer Elemente sowie gegebenenfalls deren ansteuerbare Antriebe, optional ein gesteuert verstellbarer Farbteiler sowie erfindungsgemäß ein Schaltelement, mittels dem in einem Detektionsstrahlengang zwischen einem ersten Detektionspfad und einem zweiten Detektionspfad gewählt werden und die erfasste Detektionsstrahlung entsprechend in den jeweils ausgewählten Detektionspfad gelenkt werden kann. Ein Schaltelement ist beispielsweise ein Klappspiegel oder ein mit verschiedenen dichroitischen Strahlteilern bestücktes Filterrad oder ähnliches.

Der Vorgang des Umschaltens zwischen den Betriebsarten sowie optional eine Ansteuerung der Lichtquelle erfolgt durch Steuerbefehle, die von einer Steuereinheit generiert werden. Diese Steuereinheit ist beispielsweise ein Rechner, der in einer zur Übertragung von Daten geeigneten Weise mit den anzusteuernden technischen Elementen in Verbindung steht. Der erste und der zweite Detektor können ebenfalls mit der Steuereinheit und/oder mit einer Auswerteeinheit datentechnisch verbunden sein. Beispielsweise kann die Steuereinheit dazu konfiguriert sein, die Lichtfelddetektion auf einen aktuell vorliegenden Beleuchtungszustand, beispielsweise eine aktuelle Lage, Inklination und/oder Intensität des erzeugten Lichtblatts abzustimmen.

Mittels der Steuereinheit kann in weiteren Ausführungen der Erfindung die Lichtquelle angesteuert werden, sodass in den beiden Betriebsarten jeweils angepasste Intensitäten der Anregungsstrahlung, die insbesondere eine Laserstrahlung ist, zur Verfügung gestellt sind.

In der zweiten Betriebsart des Mikroskops sind das erste zylinderoptische Element der ersten Vorrichtung und das zweite zylinderoptische Element der zweiten Vorrichtung aus dem Anregungsstrahlengang entfernt, die Anregungsstrahlung ist in mindestens einen Fokus auf die Probe gerichtet und der Fokus beziehungsweise die Foki können mittels der Scanvorrichtung, beispielsweise rasterförmig, über die Probe geführt werden.

Liegt die zweite Betriebsart des Mikroskops vor, befindet sich also das Mikroskop in dem zweiten Betriebszustand, wird eine durch die in den Fokus gerichtete Anregungsstrahlung in der beleuchteten Probe bewirkte Detektionsstrahlung in einem zweiten Detektionspfad geführt. In dem zweiten Detektionspfad ist ein zweiter Detektor zur Erfassung der Detektionsstrahlung vorhanden.

Eine Umschaltung zwischen den beiden Betriebsarten ist vorteilhaft innerhalb einer kurzen Zeitspanne möglich. Dazu können die oben angeführten Mittel zum Umschalten und deren Antriebe mittels der Steuereinheit koordiniert angesteuert werden, so dass ein Umschalten beispielsweise in weniger als einer Sekunde erfolgt.

In einer weiteren Ausführung des Mikroskops kann im Anregungsstrahlengang zwischen der Lichtquelle und dem Farbteiler ein ansteuerbares optisches Element zur Beeinflussung der Intensitätsverteilung der Anregungsstrahlung im Probenraum beziehungsweise in der Probe angeordnet sein. Dabei wird für einen jeweiligen Moment lediglich die Intensität der Anregungsstrahlung beeinflusst. Erst über einen bestimmten Zeitraum und eine Mehrzahl von Positionen der Anregungsstrahlung, insbesondere infolge der Scanbewegung der Scanvorrichtung, ergibt sich dann eine Modulation der Intensitätsverteilung im Probenraum beziehungsweise in der Probe. Eine Modulation der räumlichen Intensitätsverteilung ergibt sich also durch die zeitliche Modulation im Zusammenhang mit dem Scanvorgang und der tatsächlich eingestrahlten Intensität des Anregungslichtes in Abhängigkeit von der Probenposition.

Die Aufgabe der Erfindung wird weiterhin mit einem Verfahren zum Betrieb eines Mikroskops mit zwei Betriebsarten gelöst. In der ersten Betriebsart wird eine bereitgestellte Anregungsstrahlung in einem Anregungsstrahlengang geformt, indem diese in ihrem Querschnitt mittels eines ersten zylinderoptischen Elements quer zur Ausbreitungsrichtung der Anregungsstrahlung, also quer zur optischen Achse, in einer ersten Richtung beschränkt wird. Dies erfolgt vorzugsweise mittels eines ersten zylinderoptischen Elements. Die derart geformte Anregungsstrahlung wird mittels eines unter einem Kippwinkel angeordneten reflektierenden Elements, beispielsweise eines Farbteilers, reflektiert, wobei der Kippwinkel eine Abweichung der reflektierten Anregungsstrahlung von der optischen Achse bewirkt. Die reflektierte Anregungsstrahlung wird mittels eines zweiten zylinderoptischen Elements geformt wird, indem diese in ihrem Querschnitt mittels des zweiten zylinderoptischen Elements quer zur Ausbreitungsrichtung der Anregungsstrahlung in einer zur ersten Richtung orthogonalen zweiten Richtung aufgezogen wird. Die in zwei Richtungen geformte Anregungsstrahlung wird abseits der optischen Achse in eine bildseitige Eintrittspupille eines Objektivs eingestrahlt. Infolge der Einstrahlung außerhalb der optischen Achse wird ein schräggestelltes Lichtblatt in einem objektseitigen Probenraum erzeugt. Die Anregungsstrahlung bewirkt in einer in dem Probenraum befindlichen Probe eine Detektionsstrahlung, die mittels des Objektivs gesammelt lichtfeldmikroskopisch erfasst wird, indem diese mittels eines Detektors mit vorgeordnetem Mikrolinsenarray detektiert wird.

In der zweiten Betriebsart ist das Mikroskop in einen zweiten Betriebszustand überführt. Dazu wird das erste und das zweite zylinderoptische Element aus dem Anregungsstrahlengang entfernt und die Anregungsstrahlung wird in mindestens einen Fokus auf die Probe gerichtet. Der Fokus beziehungsweise die Foki, werden, insbesondere rasterförmig, über die Probe geführt. Eine durch die fokussierte Anregungsstrahlung in der Probe bewirkte Detektionsstrahlung wird mittels des Objektivs gesammelt und in einem konfokalen zweiten Detektionspfad erfasst.

In einer weiteren Ausgestaltung des erfindungsgemäßen Verfahrens wird in der ersten Betriebsart die Anregungsstrahlung im Anregungsstrahlengang mittels eines optischen Elements zur Beeinflussung der Intensitätsverteilung der Anregungsstrahlung derart eingestellt, dass das erzeugte Lichtblatt eine zumindest weitgehend gleichmäßige Intensitätsverteilung insbesondere entlang seines Querschnitts aufweist.

Die während der ersten Betriebsart und während der zweiten Betriebsart erfassten Bilddaten können in einer vorteilhaften Ausgestaltung des erfindungsgemäßen Verfahrens ausgewertet und miteinander verrechnet werden. Beispielsweise können die so miteinander verrechneten Bilddaten in einer gemeinsamen Darstellung zusammengeführt werden. Eine derartige Ausgestaltung erlaubt es, die Vorteile der Lichtfelddetektion und insbesondere der konfokalen Detektion miteinander zu kombinieren und für einen Benutzer einen erhöhten Informationsgehalt bereitzustellen. Sind die Bilddaten der beiden Betriebsarten in geeigneter Weise einander zugeordnet, können diese auch weiteren Auswertungen zur Verfügung gestellt werden.

Die Erfindung wird nachfolgend anhand von Ausführungsbeispielen und Abbildungen näher erläutert. Es zeigen:
Fig. 1 eine schematische Darstellung eines ersten Ausführungsbeispiels der Erfindung in einer ersten Betriebsart, wobei eine Lichtfelddetektion im Fourierraum erfolgt;
Fig. 2 eine schematische Darstellung eines zweiten Ausführungsbeispiels der Erfindung in einer ersten Betriebsart, wobei eine Lichtfelddetektion im Ortsraum erfolgt;
Fig. 3 eine schematische Darstellung eines dritten Ausführungsbeispiels der Erfindung in einer zweiten Betriebsart; und
Fig. 4 eine schematische Detaildarstellung eines Farbteilers in Form eines Filterrades mit verschiedenen optischen Elementen.

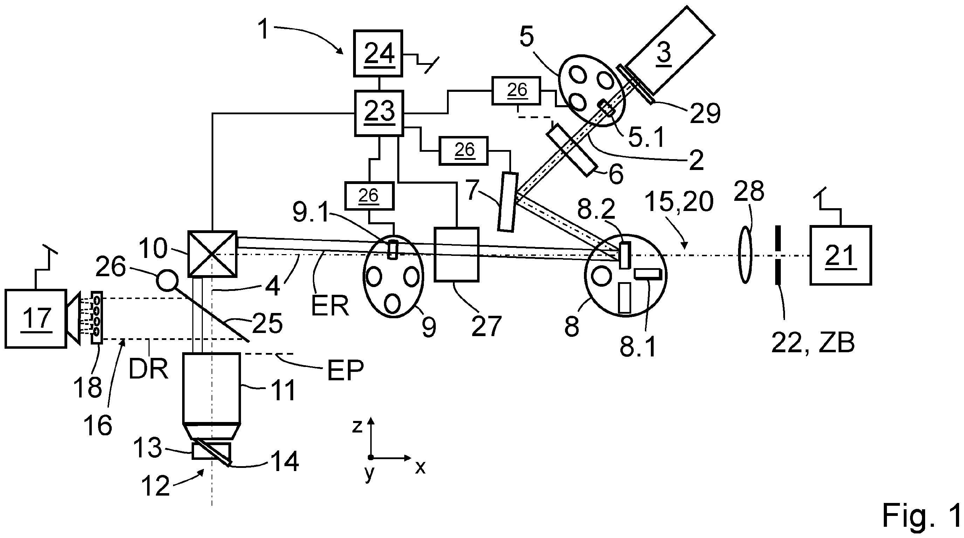

Der grundsätzliche Aufbau eines erfindungsgemäßen Mikroskops 1 ist schematisch in der Fig. 1 wiedergegeben. Aus Gründen der Übersichtlichkeit werden in allen Abbildungen nur diejenigen technischen Elemente gezeigt, die für die Erläuterung der Erfindung erforderlich sind. Eine in einem Anregungsstrahlengang 2 des Mikroskops 1 angeordnete Lichtquelle 3, die insbesondere als eine Laserlichtquelle 3 ausgebildet ist, sendet eine Anregungsstrahlung ER (excitation radiation) entlang einer optischen Achse 4 des Anregungsstrahlengangs 2. Im dargestellten ersten Betriebszustand des Mikroskops 1, in dem das Mikroskop 1 in einer ersten Betriebsart verwendet wird, ist eine erste Vorrichtung 5 zum Einbringen optischer Elemente in den Anregungsstrahlengang 2 vorhanden und ein erstes zylinderoptisches Element 5.1 in Form einer ersten Zylinderlinse ist in den Anregungsstrahlengang 2 eingebracht. Durch Wirkung des ersten zylinderoptischen Elements 5.1 wird die Anregungsstrahlung ER geformt, indem diese quer zur Ausbreitungsrichtung der Anregungsstrahlung ER, also quer zur optischen Achse 4, in einer ersten Richtung beschränkt wird. Auf diese Weise wird eine Dicke eines zu erzeugenden Lichtblatts 14 im Wesentlichen eingestellt. Mittels einer optional nachfolgend im Anregungsstrahlengang 2 angeordneten Blende 6 kann die Dicke des Lichtblatts 14 noch präziser eingestellt beziehungsweise variiert werden. Dazu kann die Blende 6 als eine einstellbare Spaltblende, als ein Rad oder ein Schieber mit unterschiedlichen Blendenaperturen ausgebildet sein. Je nachdem, welche der verfügbaren Blendenaperturen jeweils in den Anregungsstrahlengang 2 eingebracht ist, wird die Dicke des Lichtblatts 14 beeinflusst. Eine Stellbewegung der Blende 6 kann mittels eines Antriebs 26 erfolgen, der per Steuerbefehl einer Steuereinheit 23 ansteuerbar ist.

Die geformte Anregungsstrahlung gelangt zu einem justierbaren Spiegel 7, der die Anregungsstrahlung ER auf einen Farbteiler 8 reflektiert. Mittels des Spiegels 7 kann die Strahllage angepasst werden, wenn beispielsweise ein Objektivwechsel vorgenommen wurde und die Beleuchtung an die sich dadurch veränderte Pupillenberandung angepasst werden soll.

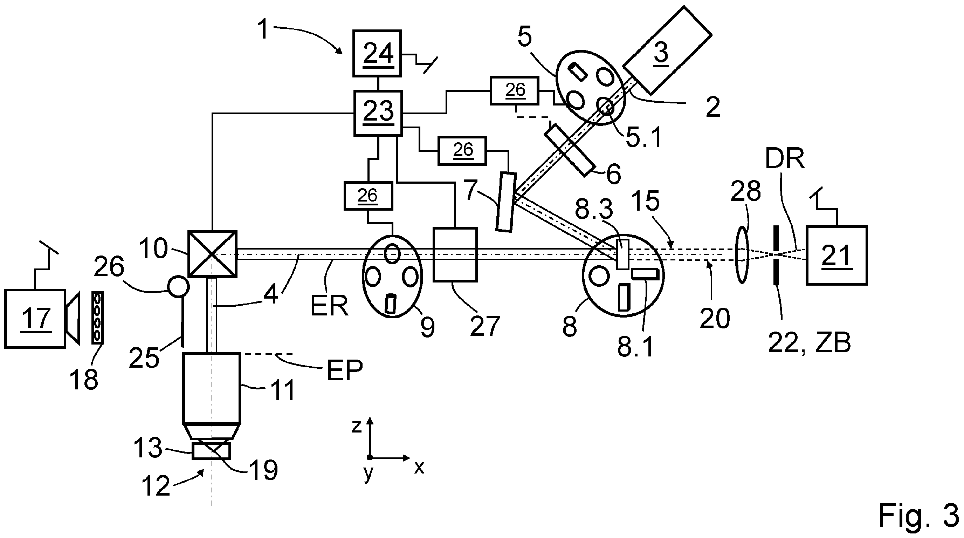

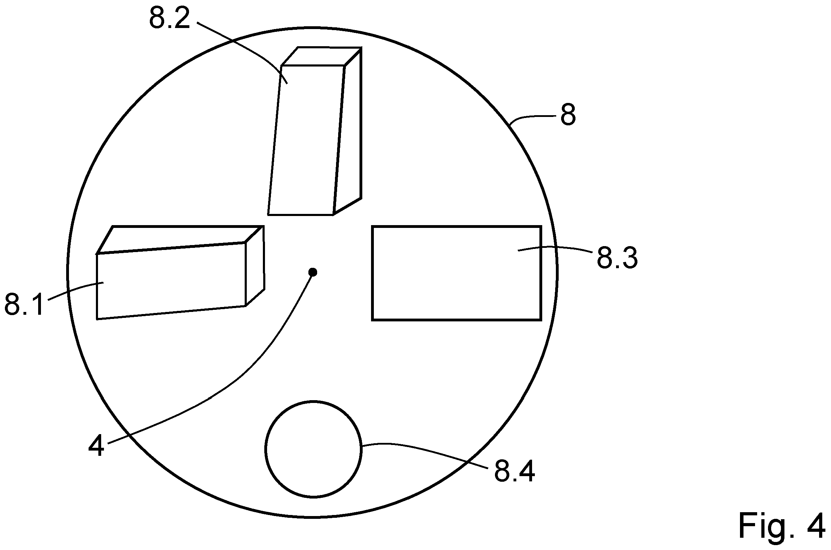

Der Farbteiler 8 ist für die Anregungsstrahlung ER reflektierend während er für eine in einer zweiten Betriebsart (siehe Fig. 3) zu erfassenden Detektionsstrahlung DR (detection radiation) transparent ist. Der Farbteiler 8 ist als ein sogenanntes Farbteilerrad oder Teilerrad ausgebildet und kann mindestens einen gekippten Spiegel 8.1 aufweisen, durch dessen Wirkung die Anregungsstrahlung ER unter einem Kippwinkel und etwas von der optischen Achse 4 abweichend entlang des weiteren Anregungsstrahlengangs 2 reflektiert wird. Auf dem Teilerrad des Farbteilers 8 können weitere gekippte Spiegel 8.2 vorhanden sein (lediglich ein zweiter dargestellt), durch deren Wirkung im Ergebnis die Lage und/oder die Richtung des zu erzeugenden Lichtblatts 14 verändert werden kann. Das Teilerrad enthält weiterhin einen Spiegel 8.3 ohne Kippwinkel (siehe auch Fig. 4).

Die derart reflektierte Anregungsstrahlung ER trifft auf ein zweites zylinderoptisches Element 9.1, das in einer zweiten Vorrichtung 9 zum Einbringen optischer Elemente in den Anregungsstrahlengang 2 eingeschwenkt ist. Das zweite zylinderoptische Element 9.1 bewirkt eine Verbreiterung der geformten Anregungsstrahlung ER in einer zur ersten Richtung orthogonalen zweiten Richtung. Es wird also mittels des zweiten zylinderoptischen Elements 9.1 eine Breite des Lichtblatts 14 eingestellt.

Die in der ersten und der zweiten Richtung geformte und jeweils entsprechend in einer Richtung fokussierte Anregungsstrahlung ER, genauer: dessen Strahlenbündel, gelangt zu einer Scanvorrichtung 10, mittels der das Strahlenbündel der Anregungsstrahlung ER in zwei zueinander senkrechte Richtungen gesteuert abgelenkt werden kann (x-y-Scanner).

Zur Ansteuerung der Lichtquelle 3, der ersten Vorrichtung 5, optional der Blende 6 und/oder des justierbaren Spiegels 7, des Teilerrads des Farbteilers 8, optional einer Zoomoptik 27, der zweiten Vorrichtung 9, der Scanvorrichtung 10 und eines Schaltelements 25 ist eine Steuereinheit 23 vorhanden und über Datenverbindungen mit den vorgenannten technischen Einheiten beziehungsweise mit diesen zugeordneten Antrieben 26 in jeweils einer zum Austausch von Daten geeigneten Weise verbunden. Die Steuereinheit 23 ist außerdem mit einer Auswerteeinheit 24 verbunden, die zur Auswertung der Bilddaten des ersten Detektors 17 und des zweiten Detektors 21 sowie optional zur Verrechnung der Bilddaten miteinander konfiguriert ist. Die Auswerteeinheit 24 und die Detektoren 17, 21 sind miteinander datentechnisch verbunden (angedeutet gezeigt).

Die durch die Steuereinheit 23 angesteuerte Scanvorrichtung 10 lenkt das Anregungslicht ER, insbesondere Laserlicht, gesteuert in einer x-Richtung x und/oder in einer y-Richtung y ab (Scanbewegung). Mit der Scanvorrichtung 10 können der Einstrahlwinkel und ein Eintrittsort des Anregungslichtes ER in einer Eintrittspupille EP (Objektivpupille) eines gemeinsam zur Beleuchtung und Detektion eingesetzten Objektivs 11 variiert und somit die Lage des Lichtblatts 14 eingestellt werden.

Die Anregungsstrahlung ER wird in einen Eintrittsort in der Eintrittspupille EP gerichtet, der abseits der optischen Achse 4 des Objektivs 11 liegt. Im Ergebnis des Eintrittsorts und der Scanbewegung wird objektseitig durch das Objektiv 18 ein zur optischen Achse 4 inkliniertes Lichtblatt 14 in einer entsprechend inklinierten Lichtblattebene erzeugt. Befindet sich in einem Probenraum 12 vor dem Objektiv 11 eine Probe 13, kann das Lichtblatt 14 in diese gerichtet werden.

Eine in der Probe 13 bewirkte Detektionsstrahlung DR wird mittels des Objektivs 11 gesammelt. Diese wird durch Wirkung eines in den Strahlengang eingebrachten Schaltelements 25 in einen ersten Detektionspfad 16 (mit unterbrochener Volllinie veranschaulicht) eines Detektionsstrahlengangs 15 gelenkt. Das Schaltelement 25 ist als ein dichroitischer Strahlteiler ausgebildet und wird mittels eines Antriebs 26 in den Strahlengang gebracht beziehungsweise aus diesem entfernt. In dem ersten Detektionspfad 16 ist in einer Pupille ein Mikrolinsenarray 18 angeordnet. Die einzelnen Mikrolinsen (nur angedeutet gezeigt) fokussieren die jeweils durch sie erfasste Detektionsstrahlung DR in eine Bildebene, in der eine Anzahl von Detektorelementen (nicht gezeigt) eines ersten Detektors 17 angeordnet sind. Die jeweils einer Mikrolinse optisch zugeordneten Detektorelemente erfassen jeweils das von der betreffenden Mikrolinse aufgenommene Bild. Die so erhaltenen Bilddaten werden einer Auswerteeinheit 24 übermittelt und entsprechend der Prinzipien der Lichtfeldtechnologie im Sinne der Lichtfelddetektion im Fourierraum ausgewertet.

Optional kann zwischen der Lichtquelle 3 und dem Farbteiler 8 ein ansteuerbares optisches Element 29 zur Beeinflussung der Intensitätsverteilung der Anregungsstrahlung ER im Probenraum 12 beziehungsweis in einer dort befindlichen Probe 13 vorhanden sein. Das optische Element 29 kann beispielsweise mittels der Steuereinheit 23 angesteuert und zum Beispiel als ein AOTF (akustooptisches steuerbares Filter; acusto optical tunable filter) ausgebildet sein. Wird beispielsweise in der weiter unten beschriebenen zweiten Betriebsart keine gezielte Beeinflussung der Intensitätsverteilung der Anregungsstrahlung ER benötigt, kann das optische Element 29 in einen neutralen beziehungsweise zeitlich konstanten Schaltzustand gebracht oder aus dem Anregungsstrahlengang 2 entfernt werden. Ziel einer solchen Beeinflussung der Intensitätsverteilung der Anregungsstrahlung ER ist es, dem infolge der Scanbewegung erzeugten Lichtblatt 14 eine möglichst gleichmäßige Intensitätsverteilung über dessen Querschnitt zu geben. Insbesondere soll dabei die Wirkung des Randabfalls des Intensitätsprofils zumindest reduziert werden.

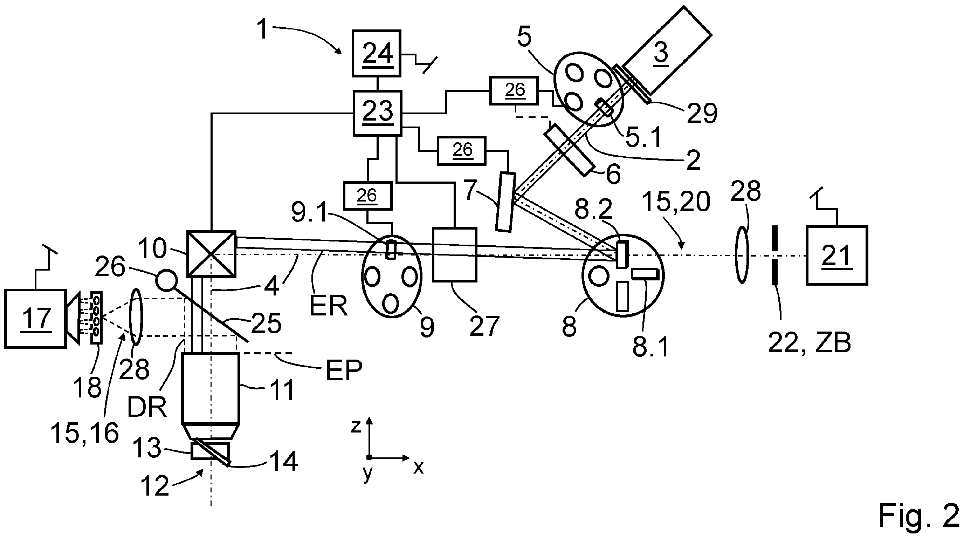

Das in der Fig. 2 gezeigte Ausführungsbeispiel entspricht im Wesentlichen dem Ausführungsbeispiel zu Fig. 1, allerdings befindet sich im ersten Detektionspfad 16 mindestens eine optische Linse 28, durch deren Wirkung die Detektionsstrahlung DR in eine nominale Bildebene fokussiert wird, in der sich das Mikrolinsenarray 18 befindet. In dieser Ausführung des Mikroskops 1 erfolgt die Lichtfelddetektion im Ortsraum.

Der Betriebszustand des Mikroskops 1 in seiner zweiten Betriebsart ist schematisch in Fig. 3 gezeigt. Die erste Vorrichtung 5 und die zweite Vorrichtung 9 sind gegenüber dem Anregungsstrahlengang 2 so eingestellt, dass die Anregungsstrahlung ER durch eine unbesetzte Position der jeweiligen Vorrichtung 5, 9 hindurchtreten kann. In alternativen Ausführungen können die erste und die zweite Vorrichtung 5, 9 aus dem Anregungsstrahlengang 2 entfernt sein. Der Querschnitt des Strahlenbündels der Anregungsstrahlung ER wird lediglich durch die aktuelle Größe und gegebenenfalls die Form der Apertur der Blende 6 beeinflusst. Der Farbteiler 8 ist so gestellt, dass ein Spiegel 8.3 ohne Kippwinkel im Anregungsstrahlengang 2 steht.

Die Anregungsstrahlung ER wird in der zweiten Betriebsart ausgehend von dem Spiegel 8.3 entlang der optischen Achse 4 reflektiert. Sollte einer der gekippten Spiegel 8.1, 8.2 des Farbteilers 8 in dem Strahlengang verbleiben, kann eine Abweichung von der optischen Achse 4 mittels der entsprechend angesteuerten Scanvorrichtung 10 ausgeglichen werden. In dem dargestellten Ausführungsbeispiel befindet sich zwischen Farbteiler 8 und zweiter Vorrichtung 9 eine optionale Zoomoptik 27, die durch die Steuereinheit 23 ansteuerbar ist.

Die Anregungsstrahlung ER wird durch das Objektiv 11 in einen Fokus 19 gerichtet, der mittels der Scanvorrichtung 10 in Richtung einer x-Achse und einer y-Achse eines kartesischen Koordinatensystems gesteuert ausgelenkt und somit die Probe 13 abgetastet wird. Die infolge der fokussierten Anregungsstrahlung ER in der Probe 13 bewirkte Detektionsstrahlung DR wird wiederum mit dem Objektiv 11 gesammelt, durch Wirkung der Scanvorrichtung 10 in einen ruhenden Strahl überführt ("descannt") und gelangt über die zweite Vorrichtung 9 und die optionale Zoomoptik 27 zum Farbteiler 8, der für die Detektionsstrahlung DR transparent ist. Die Detektionsstrahlung DR wird in einen zweiten Detektionspfad 20 gelenkt, der als ein konfokaler Detektionspfad ausgestaltet ist.

In diesem ist wenigstens eine optische Linse 28 angeordnet, welche die Detektionsstrahlung DR in eine Zwischenbildebene ZB fokussiert. In dieser Zwischenbildebene ZB befindet sind eine Lochblende 22 (Pinhole 22) die dazu dient, außerfokale Anteile der Detektionsstrahlung DR abzuschirmen. Dem Pinhole 22 nachgeordnet ist ein zweiter Detektor 21 vorhanden. Die mittels des zweiten Detektors 21 erfassten Bilddaten werden der Auswerteeinheit 24 übermittelt. Außerdem erhält die Auswerteeinheit 24 von der Steuereinheit 23 jeweils aktuelle Positionsdaten der Scanvorrichtung 10, sodass den erfassten Bilddaten jeweils ein Ursprungsort in der Probe 13 zugeordnet werden kann.

Die Fig. 4 zeigt schematisch den Farbteiler 8 in einer Ausführung als (Farb-)Teilerrad. Auf den dargestellten vier Positionen sind um die optische Achse 4 ein erster gekippter Spiegel 8.1, ein zweiter gekippter Spiegel 8.2, ein Spiegel 8.3 ohne Kippwinkel und eine freie Position 8.4 angeordnet. Der erste gekippten Spiegel 8.1 weist einen Kippwinkel von 0,5° auf, während der zweite gekippte Spiegel 8.2 eine Kippwinkel von - 0,5° aufweist. Durch den zweiten gekippten Spiegel 8.2 wird das Strahlenbündel der Anregungsstrahlung ER also in eine entgegengesetzte Richtung ausgelenkt als dies mit dem ersten gekippten Spiegel 8.1 erfolgt. Der Spiegel 8.3 weist keine Kippwinkel auf und reflektiert Anregungsstrahlung ER im Wesentlichen entlang der optischen Achse 4.

### Bezugszeichen

- 1: Mikroskop
- 2: Anregungsstrahlengang
- 3: (Laser-)Lichtquelle
- 4: optische Achse
- 5: erste Vorrichtung
- 5.1: erstes zylinderoptisches Element
- 6: Blende (FAST)
- 7: justierbarer Spiegel
- 8: Farbteiler
- 8.1: gekippter Spiegel
- 8.2: gekippter Spiegel
- 8.3: Spiegel (ohne Kippwinkel)
- 84.: freie Position
- 9: zweite Vorrichtung
- 9.1: zweites zylinderoptisches Element
- 10: Scanvorrichtung
- 11: Objektiv
- 12: Probenraum
- 13: Probe
- 14: Lichtblatt
- 15: Detektionsstrahlengang
- 16: erster Detektionspfad
- 17: erster Detektor
- 18: Mikrolinsenarray
- 19: Fokus
- 20: zweiter Detektionspfad
- 21: zweiter Detektor
- 22: Lochblende, Pinhole
- 23: Steuereinheit
- 24: Auswerteeinheit
- 25: Schaltelement
- 26: Antrieb
- 27: Zoomoptik
- 28: optische Linse
- 29: optisches Element [zur Beeinflussung Intensitätsverteilung der Anregungsstrahlung (ER)]
- EP: Eintrittspupille
- ER: Anregungsstrahlung
- DR: Detektionsstrahlung
- ZB: Zwischenbild

## Patentansprüche

1. Mikroskop (1) umfassend einen Anregungsstrahlengang (2), in dem
- eine Lichtquelle (3) zur Bereitstellung einer Anregungsstrahlung (ER);
- eine Scanvorrichtung (10) zur gesteuerten Auslenkung der Anregungsstrahlung (ER);
- ein Objektiv (11) zum Beleuchten einer in einem Probenraum (12) befindlichen Probe (13) mit der Anregungsstrahlung (ER) und zum Erfassen einer mittels der Anregungsstrahlung (ER) bewirkten Detektionsstrahlung (DR); und
- Mittel zum Umschalten zwischen einer ersten Betriebsart des Mikroskops (1) und einer zweiten Betriebsart des Mikroskops (1) vorhanden sind;
**dadurch gekennzeichnet, dass**
- ein Farbteiler (8), der für die Anregungsstrahlung (ER) reflektierend ist und durch dessen Wirkung ein Strahlenbündel der Anregungsstrahlung (ER) entlang des weiteren Anregungsstrahlengangs (2) reflektiert wird, in dem Anregungsstrahlengang (2) vorhanden ist;
- in dem Anregungsstrahlengang (2) zwischen Lichtquelle (3) und Farbteiler (8) eine erste Vorrichtung (5) zum Einbringen optischer Elemente in den Anregungsstrahlengang (2) vorhanden ist, wobei mittels der ersten Vorrichtung (5) in einem ersten Betriebszustand des Mikroskops (1) ein erstes zylinderoptisches Element (5.1) in den Anregungsstrahlengang (2) eingebracht werden kann;
- in dem Anregungsstrahlengang (2) zwischen Farbteiler (8) und der Scanvorrichtung (10) eine zweite Vorrichtung (9) zum Einbringen optischer Elemente in den Anregungsstrahlengang (2) vorhanden ist, wobei mittels der zweiten Vorrichtung (9) in dem ersten Betriebszustand des Mikroskops (1) ein zweites zylinderoptisches Element (9.1) in den Anregungsstrahlengang (2) eingebracht werden kann; und
- ein Schaltelement (25) vorhanden ist, mittels dem in einem Detektionsstrahlengang zwischen einem ersten Detektionspfad (16) und einem zweiten Detektionspfad (20) gewählt werden kann und die erfasste Detektionsstrahlung (DR) in den jeweils ausgewählten Detektionspfad (16, 20) gelenkt wird.

2. Mikroskop (1) nach Anspruch 1, **dadurch gekennzeichnet, dass** in dem Anregungsstrahlengang (2) zwischen der ersten Vorrichtung (5) zum Einbringen optischer Elemente in den Anregungsstrahlengang (2) und dem Farbteiler (8) eine einstellbare Blende (6) vorhanden ist.

3. Mikroskop (1) nach Anspruch 1 oder 2, **dadurch gekennzeichnet, dass** in dem Anregungsstrahlengang (2) und dem Farbteiler (8) vorgeordnet ein justierbarer Spiegel (7) vorhanden ist, durch dessen Wirkung die Anregungsstrahlung (ER) auf den Farbteiler (8) gelenkt wird.

4. Mikroskop (1) nach einem der vorhergehenden Ansprüche, **dadurch gekennzeichnet, dass** der Farbteiler (8) einen um einen Kippwinkel geneigten Spiegel (8.1, 8.2) aufweist, wobei der Kippwinkel zu einer Abweichung des Strahlenbündels der reflektierten Anregungsstrahlung (ER) von einer optischen Achse (4) des Mikroskops (1) führt.

5. Mikroskop (1) nach einem der vorhergehenden Ansprüche, **dadurch gekennzeichnet, dass** eine durch die Anregungsstrahlung (ER) in einer beleuchteten Probe (13) bewirkte Detektionsstrahlung (DR) in einem ersten Detektionspfad (16) geführt ist, und in dem ersten Detektionspfad (16) ein erster Detektor (17) mit einem vorgeordneten Mikrolinsenarray (18) mit einer Anzahl von Mikrolinsen vorhanden ist, wobei jeder Mikrolinse eine Anzahl von Detektorelementen des ersten Detektors (17) optisch zugeordnet sind, so dass neben einer Ortsinformation des Ursprungs der Detektionsstrahlung (DR) auch mehrere Winkelinformationen der Detektionsstrahlung (DR) erfasst werden können.

6. Mikroskop (1) nach Anspruch 1, **dadurch gekennzeichnet, dass** mittels der Scanvorrichtung (10) die reflektierte Anregungsstrahlung (ER) des Mikroskops (1) gesteuert ausgelenkt werden kann.

7. Mikroskop (1) nach Anspruch 6, **dadurch gekennzeichnet, dass** in dem zweiten Betriebszustand das zylinderoptische Element (5.1) der ersten Vorrichtung (5) und das zylinderoptische Element (9.1) der zweiten Vorrichtung (9) aus dem Anregungsstrahlengang (2) entfernt ist, die Anregungsstrahlung (ER) in mindestens einen Fokus (19) auf die Probe (13) gerichtet ist und der Fokus (19) mittels der Scanvorrichtung (10) über die Probe (13) geführt werden kann.

8. Mikroskop (1) nach Anspruch 6 oder 7, **dadurch gekennzeichnet, dass** in dem zweiten Betriebszustand in einem Detektionsstrahlengang (15) des Mikroskops (1) eine durch die in den Fokus (19) gerichtete Anregungsstrahlung (ER) in der Probe (13) bewirkte Detektionsstrahlung (DR) in einem zweiten Detektionspfad (20) geführt ist, und in dem zweiten Detektionspfad (20) ein zweiter Detektor (21) zur Erfassung der Detektionsstrahlung (DR) vorhanden ist.

9. Mikroskop (1) nach einem der vorhergehenden Ansprüche, **dadurch gekennzeichnet, dass** im Anregungsstrahlengang (2) zwischen der Lichtquelle (3) und dem Farbteiler (8) ein ansteuerbares optisches Element (29) zur Beeinflussung der Intensitätsverteilung der mittels der Scanvorrichtung (10) gesteuert ausgelenkten Anregungsstrahlung (ER) im Probenraum (12) beziehungsweise in der Probe (13) angeordnet ist.

10. Verfahren zum Betrieb eines Mikroskops (1) mit einer ersten und einer zweiten Betriebsart, bei dem
in der ersten Betriebsart
- eine Anregungsstrahlung (ER) in einem Anregungsstrahlengang (2) geformt wird, indem diese in ihrem Querschnitt mittels eines ersten zylinderoptischen Elements (5.1) quer zur Ausbreitungsrichtung der Anregungsstrahlung (ER) in einer ersten Richtung beschränkt wird;
- die derart geformte Anregungsstrahlung (ER) mittels eines unter einem Kippwinkel angeordneten reflektierenden Elements (8.1, 8.2) reflektiert wird, wobei der Kippwinkel eine Abweichung der reflektierten Anregungsstrahlung (ER) von einer optischen Achse (4) des Mikroskops (1) bewirkt;
- die reflektierte Anregungsstrahlung (ER) mittels eines zweiten zylinderoptischen Elements (9.1) geformt wird, indem diese in ihrem Querschnitt mittels des zweiten zylinderoptischen Elements (9.1) quer zur Ausbreitungsrichtung der Anregungsstrahlung (ER) in einer zur ersten Richtung orthogonalen zweiten Richtung verbreitert wird;
- die in zwei Richtungen geformte Anregungsstrahlung (ER) abseits der optischen Achse (4) in eine bildseitige Eintrittspupille (EP) eines Objektivs (11) eingestrahlt und dadurch ein schräggestelltes Lichtblatt (14) in einem objektseitigen Probenraum (12) erzeugt wird;
- durch die Anregungsstrahlung (ER) in einer in dem Probenraum (12) befindlichen Probe (13) bewirkte Detektionsstrahlung (DR) mittels des Objektivs (11) gesammelt wird; und
- die gesammelte Detektionsstrahlung (DR) lichtfeldmikroskopisch erfasst wird, indem diese mittels eines Detektors (17) mit vorgeordnetem Mikrolinsenarray (18) detektiert wird;
und
in der zweiten Betriebsart
- das erste und das zweite zylinderoptische Element (5.1, 9.1) aus dem Anregungsstrahlengang (2) entfernt wird,
- die Anregungsstrahlung (ER) in mindestens einen Fokus (19) auf die Probe (13) gerichtet ist und der Fokus (19) rasterförmig über die Probe (13) geführt wird;
- die durch die fokussierte Anregungsstrahlung (ER) in der Probe (13) bewirkte Detektionsstrahlung (DR) mittels des Objektivs (11) gesammelt wird; und
- die gesammelte Detektionsstrahlung (DR) in einem konfokalen zweiten Detektionspfad (20) erfasst wird;
wobei in beiden Betriebsarten mittels eines Schaltelements (25) in einem Detektionsstrahlengang zwischen einem ersten Detektionspfad (16) der ersten Betriebsart und dem zweiten Detektionspfad (20) der zweiten Betriebsart gewählt und die erfasste Detektionsstrahlung (DR) in den jeweils ausgewählten Detektionspfad (16, 20) gelenkt wird.

11. Verfahren nach Anspruch 10, **dadurch gekennzeichnet, dass** die Anregungsstrahlung (ER) im Anregungsstrahlengang (2) mittels eines optischen Elements (29) zur Beeinflussung der Intensitätsverteilung der Anregungsstrahlung (ER) derart eingestellt wird, dass das erzeugte Lichtblatt (14) eine gleichmäßige Intensitätsverteilung insbesondere entlang seines Querschnitts aufweist.

12. Verfahren nach Anspruch 10, **dadurch gekennzeichnet, dass** während der ersten Betriebsart und während der zweiten Betriebsart erfasste Bilddaten ausgewertet und miteinander verrechnet werden.

## Claims

1. Microscope (1) comprising an excitation beam path (2), in which
- a light source (3) for providing excitation radiation (ER);
- a scanning apparatus (10) for the controlled deflection of the excitation radiation (ER);
- an objective (11) for illuminating a sample (13) located in a sample space (12) with the excitation radiation (ER) and for capturing detection radiation (DR) brought about by means of the excitation radiation (ER); and
- means for switching between a first operating mode of the microscope (1) and a second operating mode of the microscope (1) are present;
**characterized in that**
- a colour splitter (8), which is reflective to the excitation radiation (ER) and on account of whose effect a beam of the excitation radiation (ER) is reflected along the further excitation beam path (2), is present in the excitation beam path (2);
- a first apparatus (5) for introducing optical elements into the excitation beam path (2) is present in the excitation beam path (2) between the light source (3) and the colour splitter (8), wherein, in a first operating state of the microscope (1), a first cylindrical optical element (5.1) can be introduced into the excitation beam path (2) by means of the first apparatus (5);
- a second apparatus (9) for introducing optical elements into the excitation beam path (2) is present in the excitation beam path (2) between the colour splitter (8) and the scanning apparatus (10), wherein, in the first operating state of the microscope (1), a second cylindrical optical element (9.1) can be introduced into the excitation beam path (2) by means of the second apparatus (9); and
- a switching element (25) is present, by means of which a selection can be made between a first detection path (16) and a second detection path (20) in a detection beam path and the captured detection radiation (DR) is steered accordingly into the respectively selected detection path (16, 20).

2. Microscope (1) according to Claim 1, **characterized in that** a settable stop (6) is present in the excitation beam path (2) between the first apparatus (5) for introducing optical elements into the excitation beam path (2) and the colour splitter (8).

3. Microscope (1) according to Claim 1 or 2, **characterized in that** an adjustable mirror (7), owing to whose effect the excitation radiation (ER) is steered onto the colour splitter (8), is present in the excitation beam path (2) and upstream of the colour splitter (8).

4. Microscope (1) according to any of the preceding claims, **characterized in that** the colour splitter (8) comprises a mirror (8.1, 8.2) that is inclined by a tilt angle, wherein the tilt angle results in a deviation of the beam of the reflected excitation radiation (ER) from an optical axis (4) of the microscope (1).

5. Microscope (1) according to any of the preceding claims, **characterized in that** detection radiation (DR) brought about in an illuminated sample (13) by the excitation radiation (ER) is guided in a first detection path (16), and a first detector (17) with an upstream microlens array (18) having a number of microlenses is present in the first detection path (16), wherein each microlens is optically assigned a number of detector elements of the first detector (17), with the result that, in addition to a piece of spatial information of the origin of the detection radiation (DR), a plurality of pieces of angle information of the detection radiation (DR) can also be recorded.

6. Microscope (1) according to Claim 1, **characterized in that** the reflected excitation radiation (ER) of the microscope (1) can be deflected in a controlled manner by means of the scanning apparatus (10).

7. Microscope (1) according to Claim 6, **characterized in that**, in the second operating state, the cylindrical optical element (5.1) of the first apparatus (5) and the cylindrical optical element (9.1) of the second apparatus (9) are removed from the excitation beam path (2), the excitation radiation (ER) is directed onto the sample (13) in at least one focus (19), and the focus (19) can be guided over the sample (13) by means of the scanning apparatus (10).

8. Microscope (1) according to Claim 6 or 7, **characterized in that**, in a detection beam path (15) of the microscope (1), detection radiation (DR) brought about in the sample (13) by the excitation radiation (ER) that is directed into the focus (19) is guided, in the second operating state, in a second detection path (20), and a second detector (21) for capturing the detection radiation (DR) is present in the second detection path (20).

9. Microscope (1) according to any of the preceding claims, **characterized in that** a controllable optical element (29) for influencing the intensity distribution of the excitation radiation (ER), which is deflected in a controlled manner by means of the scanning apparatus (10), is arranged in the sample space (12) or in the sample (13) in the excitation beam path (2) between the light source (3) and the colour splitter (8).

10. Method for operating a microscope (1) having a first and a second operating mode, in which,
in the first operating mode,
- excitation radiation (ER) is shaped in an excitation beam path (2) by being limited in terms of its cross section transversely to the propagation direction of the excitation radiation (ER) in a first direction by means of a first cylindrical optical element (5.1);
- the excitation radiation (ER) thus formed is reflected by means of a reflective element (8.1, 8.2) arranged at a tilt angle, wherein the tilt angle brings about a deviation of the reflected excitation radiation (ER) from an optical axis (4) of the microscope (1);
- the reflected excitation radiation (ER) is shaped by means of a second cylindrical optical element (9.1) by being extended in terms of its cross section transversely to the propagation direction of the excitation radiation (ER) in a second direction orthogonal to the first direction by means of the second cylindrical optical element (9.1);
- the excitation radiation (ER) that has been shaped in two directions is radiated into an image-side entry pupil (EP) of an objective (11) in a manner not on the optical axis (4) and an oblique light sheet (14) is thereby generated in an object-side sample space (12);
- detection radiation (DR) brought about by the excitation radiation (ER) in a sample (13) that is located in the sample space (12) is collected by means of the objective (11); and
- the collected detection radiation (DR) is captured using light-field microscopy by being detected by means of a detector (17) having an upstream microlens array (18);
and,
in the second operating mode,
- the first and the second cylindrical optical element (5.1, 9.1) is removed from the excitation beam path (2),
- the excitation radiation (ER) is directed onto the sample (13) in at least one focus (19), and the focus (19) is guided over the sample (13) in the manner of a grid;
- the detection radiation (DR) brought about in the sample (13) by the focused excitation radiation (ER) is collected by means of the objective (11); and
- the collected detection radiation (DR) is captured in a confocal second detection path (20);
wherein, in both operating modes, a switching element (25) in a detection beam path is used to make a selection between a first detection path (16) of the first operating mode and the second detection path (20) of the second operating mode and to steer the captured detection radiation (DR) into the respectively selected detection path (16, 20).

11. Method according to Claim 10, **characterized in that** the excitation radiation (ER) in the excitation beam path (2) is set by means of an optical element (29) for influencing the intensity distribution of the excitation radiation (ER) in a manner such that the generated light sheet (14) has a uniform intensity distribution in particular along its cross section.

12. Method according to Claim 10, **characterized in that** image data captured during the first operating mode and during the second operating mode are evaluated and computationally combined.

## Revendications

1. Microscope (1) comprenant un trajet de rayons d'excitation (2), dans lequel il est prévu
- une source de lumière (3) destinée à fournir un rayonnement d'excitation (ER) ;
- un dispositif de balayage (10) destiné à dévier de manière commandée le rayonnement d'excitation (ER) ;
- un objectif (11) destiné à éclairer un échantillon (13), situé dans un espace d'échantillon (12), avec le rayonnement d'excitation (ER) et à détecter un rayonnement de détection (DR) provoqué par le rayonnement d'excitation (ER) ; et
- des moyens destinés à la commutation entre un premier mode de fonctionnement du microscope (1) et un deuxième mode de fonctionnement du microscope (1) ;
**caractérisé en ce que**
- un diviseur chromatique (8), qui réfléchit le rayonnement d'excitation (ER) et dont l'effet est de réfléchir un faisceau de rayons du rayonnement d'excitation (ER) le long de l'autre trajet de rayons d'excitation (2), est présent dans le trajet de rayons d'excitation (2) ;
- un premier dispositif (5) destiné à introduire des éléments optiques dans le trajet de rayons d'excitation (2) est présent dans le trajet de rayons d'excitation (2) entre la source de lumière (3) et le diviseur chromatique (8), un premier élément optique cylindrique (5.1) pouvant être introduit dans le trajet de rayons d'excitation (2) au moyen du premier dispositif (5) dans un premier état de fonctionnement du microscope (1) ;
- un deuxième dispositif (9) destiné à introduire des éléments optiques dans le trajet de rayons d'excitation (2) est présent dans le trajet de rayons d'excitation (2) entre le diviseur chromatique (8) et le dispositif de balayage (10), un deuxième élément optique cylindrique (9.1) pouvant être introduit dans le trajet de rayons d'excitation (2) au moyen du deuxième dispositif (9) dans le premier état de fonctionnement du microscope (1) ; et
- un élément de commutation (25) est présent qui permet de choisir entre un premier chemin de détection (16) et un deuxième chemin de détection (20) dans un trajet de rayons de détection et le rayonnement de détection détecté (DR) est dirigé dans le chemin de détection (16, 20) respectivement sélectionné.

2. Microscope (1) selon la revendication 1, **caractérisé en ce qu'**une ouverture réglable (6) est présente dans le trajet de rayon d'excitation (2) entre le premier dispositif (5) destiné à introduire des éléments optiques dans le trajet de rayons d'excitation (2) et le diviseur chromatique (8).

3. Microscope (1) selon la revendication 1 ou 2, **caractérisé en ce qu'**un miroir réglable (7), dont l'effet est de diriger le rayonnement d'excitation (ER) sur le diviseur chromatique (8), est présent dans le trajet de rayons d'excitation (2) et en amont du diviseur chromatique (8).

4. Microscope (1) selon l'une des revendications précédentes, **caractérisé en ce que** le diviseur chromatique (8) comporte un miroir (8.1, 8.2) incliné d'un angle d'inclinaison, l'angle d'inclinaison conduisant à une déviation du faisceau de rayons du rayonnement d'excitation réfléchi (ER) par rapport à un axe optique (4) du microscope (1).

5. Microscope (1) selon l'une des revendications précédentes, **caractérisé en ce qu'**un rayonnement de détection (DR), provoqué par le rayonnement d'excitation (ER) dans un échantillon éclairé (13), est guidé dans un premier chemin de détection (16) et un premier détecteur (17) comprenant un réseau de microlentilles amont (18) pourvu d'un certain nombre de microlentilles est présent dans le premier chemin de détection (16), un certain nombre d'éléments de détection du premier détecteur (17) étant associés optiquement à chaque microlentille de sorte que, en plus d'une information de localisation de l'origine du rayonnement de détection (DR), une pluralité d'informations d'angle du rayonnement de détection (DR) peuvent également être détectées.

6. Microscope (1) selon la revendication 1, **caractérisé en ce que** le rayonnement d'excitation réfléchi (ER) du microscope (1) peut être dévié de manière commandée au moyen du dispositif de balayage (10).

7. Microscope (1) selon la revendication 6, **caractérisé en ce que**, dans le deuxième état de fonctionnement, l'élément optique cylindrique (5.1) du premier dispositif (5) et l'élément optique cylindrique (9.1) du deuxième dispositif (9) sont éloignés du trajet de rayons d'excitation (2), le rayonnement d'excitation (ER) est dirigé vers au moins un foyer (19) sur l'échantillon (13) et le foyer (19) peut être guidé sur l'échantillon (13) au moyen du dispositif de balayage (10).

8. Microscope (1) selon la revendication 6 ou 7, **caractérisé en ce que**, dans le deuxième état de fonctionnement, dans un trajet de rayons de détection (15) du microscope (1), un rayonnement de détection (DR) provoqué dans l'échantillon (13) par le rayonnement d'excitation (ER) dirigé dans le foyer (19) est guidé dans un deuxième chemin de détection (20) et, dans le deuxième chemin de détection (20), un deuxième détecteur (21) est prévu pour détecter le rayonnement de détection (DR).

9. Microscope (1) selon l'une des revendications précédentes, **caractérisé en ce qu'**un élément optique commandable (29) est disposé dans l'espace d'échantillon (12) ou dans l'échantillon (13) dans le trajet de rayons d'excitation (2) entre la source de lumière (3) et le diviseur chromatique (8) pour influer sur la distribution d'intensité du rayonnement d'excitation (ER) dévié de manière commandée au moyen du dispositif de balayage (10).

10. Procédé de fonctionnement d'un microscope (1) comprenant un premier et un deuxième mode de fonctionnement, procédé dans lequel
dans le premier mode de fonctionnement
- un rayonnement d'excitation (ER) est formé dans un trajet de rayons d'excitation (2) en ce qu'il est limité en termes de section transversale au moyen d'un premier élément optique cylindrique (5.1) transversalement à la direction de propagation du rayonnement d'excitation (ER) dans une première direction ;
- le rayonnement d'excitation (ER) ainsi formé est réfléchi au moyen d'un élément réfléchissant (8.1, 8.2) disposé suivant un angle d'inclinaison, l'angle d'inclinaison provoquant un écart du rayonnement d'excitation réfléchi (ER) par rapport à un axe optique (4) du microscope (1) ;
- le rayonnement d'excitation réfléchi (ER) est formé au moyen d'un deuxième élément optique cylindrique (9.1) en ce qu'il est élargi en termes de section transversale au moyen du deuxième élément optique cylindrique (9.1) transversalement à la direction de propagation du rayonnement d'excitation (ER) dans une deuxième direction orthogonale à la première direction ;
- le rayonnement d'excitation (ER) formé dans deux directions est rayonné à partir de l'axe optique (4) jusque dans une pupille d'entrée côté image (EP) d'un objectif (11) et ainsi une nappe de lumière inclinée (14) est générée dans un espace d'échantillon côté objet (12) ;
- le rayonnement de détection (DR) provoqué par le rayonnement d'excitation (ER) dans un échantillon (13) situé dans l'espace d'échantillon (12) est collecté au moyen de l'objectif (11) ; et
- le rayonnement de détection collecté (DR) est détecté par microscopie à champ lumineux en ce qu'il est détecté au moyen d'un détecteur (17) pourvu d'un réseau de microlentilles amont (18) ;
et
dans le deuxième mode de fonctionnement
dans le deuxième mode de fonctionnement
le premier et le deuxième élément optique cylindrique (5.1, 9.1) sont éloignés du trajet de rayons d'excitation (2),
- le rayonnement d'excitation (ER) est dirigé sur l'échantillon (13) dans au moins un foyer (19) et le foyer (19) est guidé suivant une trame sur l'échantillon (13) ;
- le rayonnement de détection (DR) provoqué par le rayonnement d'excitation focalisé (ER) dans l'échantillon (13) est collecté au moyen de l'objectif (11) ; et
- le rayonnement de détection collecté (DR) est détecté dans un deuxième chemin de détection confocal (20) ;
dans les deux modes de fonctionnement, un élément de commutation (25) dans un trajet de rayons de détection permettant de choisir entre un premier chemin de détection (16) du premier mode de fonctionnement et le deuxième chemin de détection (20) du deuxième mode de fonctionnement, et le rayonnement de détection détecté (DR) étant dirigé dans le chemin de détection (16, 20) respectivement sélectionné.

11. Procédé selon la revendication 10, **caractérisé en ce que** le rayonnement d'excitation (ER) dans le trajet de rayons d'excitation (2) est réglé au moyen d'un élément optique (29) destiné à influer sur la distribution d'intensité du rayonnement d'excitation (ER) de manière que la nappe de lumière générée (14) présente une distribution d'intensité uniforme notamment le long de sa section transversale.

12. Procédé selon la revendication 10, **caractérisé en ce que** des données d'images acquises pendant le premier mode de fonctionnement et pendant le deuxième mode de fonctionnement sont évaluées et calculées entre elles.
